# EUROPEAN PATENT APPLICATION

(11) **EP 4 230 876 A1**
(43) Date of publication of application: **23.08.2023**
(21) Application number: 22158006.1
(22) Date of filing: 22.02.2022
(51) Int. Cl.: F15B 15/20, A01B 63/10, F15B 11/08

(54) **ELECTRO-HYDRAULIC LIFTING SYSTEM CONTROLLED WITH A SINGLE SOLENOID VALVE**

(71) Applicant: Turk Traktor Ve Ziraat Makineleri Anonim Sirketi, 06560 Ankara (TR)
(72) Inventor: ERKAL, GUL, ANKARA (TR); ATASOY, ATAKAN, ANKARA (TR); MELEZ, MURAT, ANKARA (TR)
(74) Representative: Yalçiner Patent and Consulting Ltd.

(57) **Abstract**

The invention relates to a single solenoid-controlled electro-hydraulic liftomatic system developed for controlling electrically, automating the hydraulic mechanism used in three-point hitch systems of tractors that are lifted and lowered by means of a mechanically controlled hydraulic mechanism.

## Description

### TECHNICAL FIELD

The invention relates to a single solenoid-controlled electro-hydraulic liftomatic system developed for controlling electrically, automating the hydraulic mechanism used in three-point hitch systems of tractors that are lifted and lowered by means of a mechanically controlled hydraulic mechanism.

### STATE OF THE ART

Hydraulic lift and three-point hitch system connected to the hydraulic lift are used to lift the equipment in tractors. Liftomatic system is the mechanism that mechanically controls the hydraulic lift by hand. This mechanism causes more arm movement and applying more force during use. In order to bring the mechanically controlled hydraulic lift arms to the desired position, the mechanism that triggers this arm is controlled with leverage by the user by hand. Since this system is commonly used by the farmer on the tractor, it can reach such an extent that wears the user out. In the existing liftomatic system, movement is provided by spiral and spring system, and the hydraulic piston is driven by two solenoids. In similar applications, the hydraulic piston is driven by two solenoids. In the specified system, the hydraulic piston is driven by a single solenoid. While the solenoid is deactivated, the system is returned to its initial position by means of a spring.

### BRIEF DESCRIPTION OF THE INVENTION

In order to eliminate the above-mentioned disadvantages By means of said system, the user can control the hydraulic lift by pressing a button without applying any force. The system can be activated easily.

The three-point hitch system is hydraulically triggered by the piston in the lift. In the specified system, the hydraulic piston is driven by a single solenoid. While the solenoid is deactivated, the system is returned to its initial position by means of a spring. By means of the hydraulic mechanism, the user can activate the system by pressing a button without applying any force.

The movement is provided by a single-acting hydraulic cylinder (piston), relay and a solenoid with this invention. This causes the system cost to be reduced. The mechanism is activated with a button without the need for mechanical force with this invention.

In order to achieve all objects mentioned above and will emerge from the following detailed description, the present invention relates to an electro-hydraulic liftomatic system.

In a preferred embodiment of the invention said Sub-components are Pressure relief valve (1), Hydraulic Piston (3), Solenoid valve (4), piston spring (5) and Check valve (6).

As a valve body's material, high-strength spheroidal cast material is used.

### BRIEF DESCRIPTION OF THE FIGURES

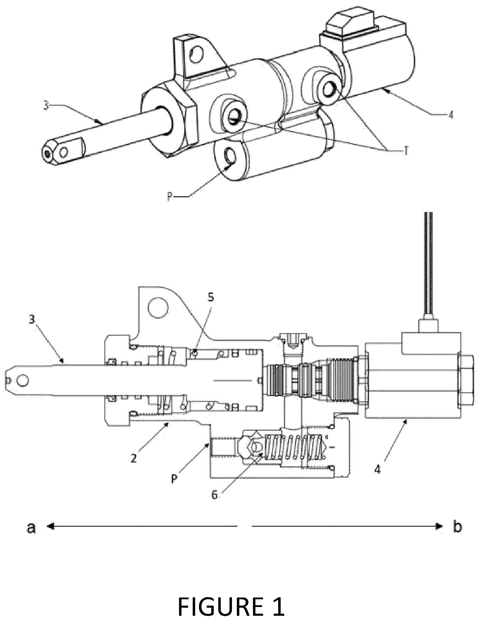

Views of the Components are given in Figure 1.

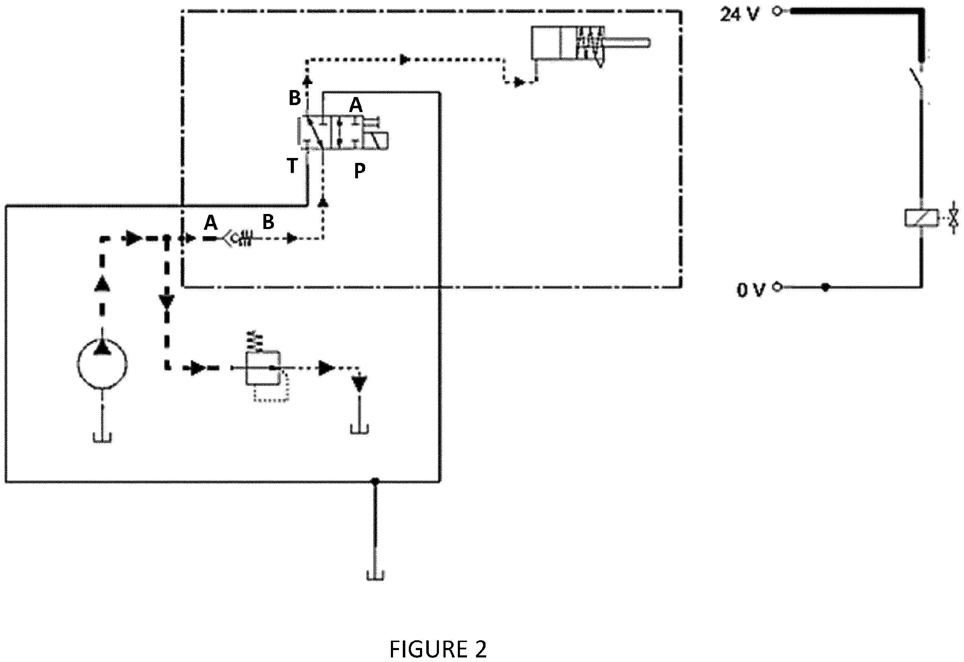

View of the Hydraulic Scheme 1 - when Solenoid is Deactivated is given in Figure 2.

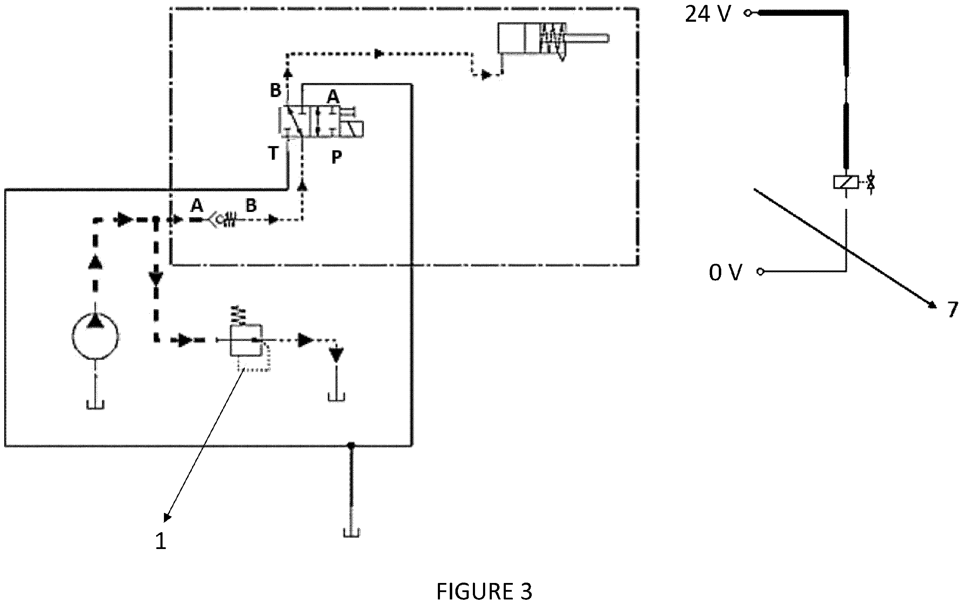

View of the Hydraulic Scheme 2 - when Solenoid is Active is given in Figure 3.

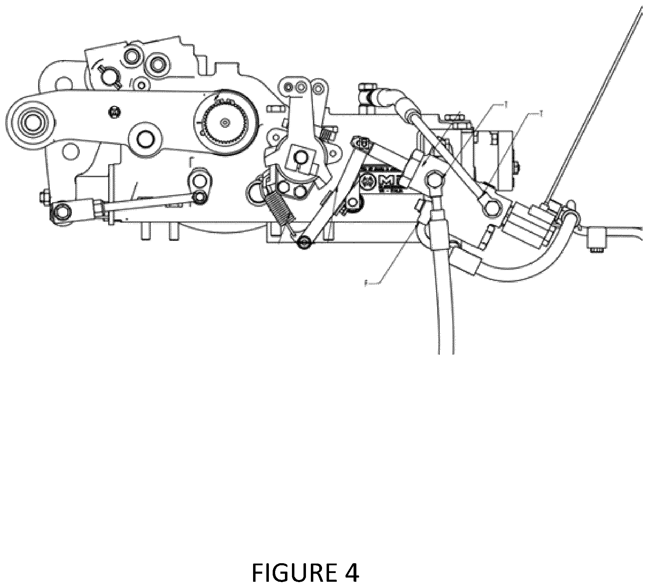

Figure 4 View of the invention on a tractor

### REFERENCE NUMBERS

- P: Hydraulic pump
- T: Tank line
- 1: Pressure Relief Valve
- 2: Valve Body
- 3: Piston
- 4: Solenoid Valve
- 5: Piston Spring
- 6: Check Valve
- 7: Time-Delay Relay

### DETAILED DESCRIPTION OF THE INVENTION

In this detailed description, novelty of the invention is only explained by way of examples that will not have any limiting effect for understanding the subject matter better.

The invention describes a single solenoid-controlled electro-hydraulic liftomatic system developed for controlling electrically, automating the hydraulic mechanism used in three-point hitch systems of tractors that are lifted and lowered by means of a mechanically controlled hydraulic mechanism.

The basic elements used in the invention are explained as actuator to pressurize the line, Hydraulic pump (P), pressure relief valve (1), tank line (T), valve body (2), hydraulic piston (3), Solenoid valve (4), piston spring (5), check valve (6), button and time-delay relay (7).

Thanks to the invention, three-point hitch apparatus of the tractor operates according to principle of activating and deactivating the Solenoid valve (4) by pressing a button, without using mechanical power by the user. When the solenoid valve (4) is active, the three-point hitch system lowers, and when the Solenoid valve (4) is deactivated, the mechanism rises.

For the hydraulic system to operate, there must be an actuator to pressurize the Hydraulic pump (P) line, a Hydraulic pump (P), a pressure relief valve (1), and a tank line (T) line in the system.

Valve body (2), Hydraulic piston (3), Solenoid valve (4), piston spring (5), check valve (6) and time-delay relay (7) are the basic components on the system.

When the solenoid valve (4) is deactivated, the Hydraulic pump (P) to which the Solenoid valve (4) is connected is in an open position and the tank line (T) is in a closed position. In this position, the pressurized oil passes through the Hydraulic pump (P) and reaches the rear surface of the Hydraulic piston (3). Pressurized oil applies a force on the surface of the Hydraulic piston (3). When the applied force starts to cancel out the force of the spring (5), the Hydraulic piston (3) moves in the direction (a). With the movement, the lift arms rise.

While the solenoid valve (4) is active, the Hydraulic pump (P) is closed and the tank line (T) is opened. Pressurized hydraulic fluid in the system moves towards the tank. With this movement, the pressure applied to the Hydraulic piston (3) surface decreases. When the force of the spring (5) cancel outs the applied force, the Hydraulic piston (3) moves in the direction (b). With the movement, the lift arms lower.

While the solenoid valve (4) is active in the system and the arms of the hydraulic lift are in the lower position, when the tractor engine is turned off, the solenoid valve (4) is deactivated instantaneously. However, it is not possible for the hydraulic line to react instantaneously like the power line. Pressurized oil continues to come from the Hydraulic pump (P) for a certain period of time due to the moment of inertia coming from the engine. This situation causes the lift to move upwards uncontrollably when the tractor is turned off and the equipment to move upwards simultaneously. A time-delay relay (7) is added to the system to prevent any undesired movement. When the tractor is turned off, energy is supplied to the time-delay relay (7) directly from the battery. When the tractor is turned off, the time-delay relay (7) supplies to solenoid valve (4) electricity for at least 4 seconds to at most 12 seconds depending on the inertia of the system. Undesired movement in the system will be prevented since the pressurized fluid will be absorbed in this period.

While the operating pressure of the system is 15 bar, oil is sent into the piston after 3.5 bar. Herein, the feature contributing to the system is that 3.5 bar check valve prevents the oil in the cylinder from returning from the pressure line.

A single solenoid-controlled Electro-hydraulic liftomatic system developed for controlling electrically, automating the hydraulic mechanism used in three-point hitch systems that are lifted and lowered by means of a mechanically controlled hydraulic mechanism, in accordance with the detailed information given above, characterized in that it comprises the following:
- Actuator which is the element providing the hydraulic power to the system that will pressurize the hydraulic pump (P) line,
- Hydraulic pump (P), which is the line where the hydraulic power source is connected and from where the power is supplied,
- The safety element, the Pressure relief valve (1), which provides the operating pressure value of the system,
- Tank line (T) where the hydraulic system is discharged,
- Valve body (2), where all sub-components are combined and the main assembly is performed,
- Hydraulic Piston (3) located in the lift, which converts hydraulic energy into mechanical energy, provides hydraulic triggering of the point hitch system, and provides mechanical control,
- At least one Solenoid valve (4) that allows the hydraulic piston (3) to be driven,
- Piston spring (5), which allows the system to return to its initial position when the solenoid valve (4) is deactivated,
- Check valve (6), which prevents the oil, which should remain pressurized within the hydraulic piston (3), from going back through the Hydraulic pump (P) line with actuator internal leakages,
- The time-delay relay (7) supplying electricity to the solenoid valve (4) for at least 4 seconds to at most 12 seconds, which prevents the undesired movement in the system since the pressurized fluid will be absorbed when the tractor is turned off
- Button for activating and deactivating the solenoid valve (4).

The sub-components are Pressure relief valve (1), Hydraulic Piston (3), Solenoid valve (4), piston spring (5) and Check valve (6).

An operating method of the single solenoid-controlled Electro-hydraulic liftomatic system, characterized in that it comprises the following steps:
When the solenoid valve (4) is deactivated;
   - The Hydraulic pump (P) to which the solenoid valve (4) is connected is in the open position and the tank line (T) is in the closed position,
   - In this position, the pressurized oil passes through the Hydraulic pump (P) and reaches the rear surface of the piston (3),
   - Pressurized oil applies a force on the surface of the Hydraulic piston (3),
   - When the applied force starts to cancel out the force of the spring (5), the piston (3) moves in the direction (a). With the movement, the lift arms rise,
When the solenoid valve (4) is active;
   - The hydraulic pump (P) is closed and the tank line (T) is opened,
   - Pressurized hydraulic fluid in the system moves towards the tank,
   - With this movement, the pressure applied to the Hydraulic piston (3) surface decreases,
   - When the force of the spring (5) cancel outs the applied force, the piston (3) moves in the direction (b), With the movement, the lift arms lower,
While the solenoid valve (4) is active in the system and the arms of the hydraulic lift are in the lower position, when the tractor engine is turned off;
   - The solenoid valve (4) is deactivated instantaneously,
   - When the tractor is turned off, energy is supplied to the time-delay relay (7) directly from the battery,
   - When the tractor is turned off, the time-delay relay (7) supplies to solenoid valve (4) electricity for at least 4 to at most 12 seconds,
   - Undesired movement in the system is prevented since the pressurized fluid will be absorbed in this period.

## Claims

1. A single solenoid-controlled electro-hydraulic liftomatic system developed for controlling electrically, automating the hydraulic mechanism used in three-point hitch systems that are lifted and lowered by means of a mechanically controlled hydraulic mechanism, **characterized in that** it comprises the following:
• Actuator which is the element providing the hydraulic power to the system that will pressurize the hydraulic pump (P) line,
• Hydraulic pump (P), which is the line where the hydraulic power source is connected and from where the power is supplied,
• The safety element, the Pressure relief valve (1), which provides the operating pressure value of the system,
• Tank line (T) where the hydraulic system is discharged,
• Valve body (2), where all sub-components are combined and the main assembly is performed,
• Hydraulic Piston (3) located in the lift, which converts hydraulic energy into mechanical energy, provides hydraulic triggering of the point hitch system, and provides mechanical control,
• At least one Solenoid valve (4) that allows the hydraulic piston (3) to be driven,
• Piston spring (5), which allows the system to return to its initial position when the solenoid valve (4) is deactivated,
• Check valve (6), which prevents the oil, which should remain pressurized within the hydraulic piston (3), from going back through the Hydraulic pump (P) line with actuator internal leakages,
• The time-delay relay (7) supplying electricity to the solenoid valve (4) for at least 4 seconds to at most 12 seconds, which prevents the undesired movement in the system since the pressurized fluid will be absorbed when the tractor is turned off
• Button for activating and deactivating the solenoid valve (4).

2. An operating method of the single solenoid-controlled electro-hydraulic liftomatic system, **characterized in that** it comprises the following steps:
When the solenoid valve (4) is deactivated;
• The Hydraulic pump (P) to which the solenoid valve (4) is connected is in the open position and the tank line (T) is in the closed position,
• In this position, the pressurized oil passes through the Hydraulic pump (P) and reaches the rear surface of the piston (3),
• Pressurized oil applies a force on the surface of the Hydraulic piston (3),
• When the applied force starts to cancel out the force of the spring (5), the piston (3) moves in the direction (a). With the movement, the lift arms rise,
When the solenoid valve (4) is active;
• The hydraulic pump (P) is closed and the tank line (T) is opened,
• Pressurized hydraulic fluid in the system moves towards the tank,
• With this movement, the pressure applied to the Hydraulic piston (3) surface decreases,
• When the force of the spring (5) cancel outs the applied force, the piston (3) moves in the direction (b), With the movement, the lift arms lower,
While the solenoid valve (4) is active in the system and the arms of the hydraulic lift are in the lower position, when the tractor engine is turned off;
• The solenoid valve (4) is deactivated instantaneously,
• When the tractor is turned off, energy is supplied to the time-delay relay (7) directly from the battery,
• When the tractor is turned off, the time-delay relay (7) supplies to solenoid valve (4) electricity for at least 4 to at most 12 seconds,
• Undesired movement in the system is prevented since the pressurized fluid will be absorbed in this period.

3. Single solenoid-controlled electro-hydraulic liftomatic system according to claim 1, **characterized in that** said sub-components are pressure relief valve (1), hydraulic piston (3), solenoid valve (4), piston spring (5) and check valve (6).

4. Single solenoid-controlled electro-hydraulic liftomatic system according to claim 1, **characterized in that** material of said Valve body (2) is spheroidal cast.

## Amended claims

### Amended claims in accordance with Rule 137(2) EPC.

1. An electro-hydraulic liftomatic system for controlling lifting and lowering systems in three-point hitch system of a tractor comprises the following:
• An actuator connectable to the system pressurized through a hydraulic pump (P) line,
• A hydraulic pump (P)connected to the hydraulic line for pressurizing the actuator,
• A safety pressure relief valve (1), which provides the operating pressure value of the system,
• A tank line (T) where the hydraulic system is discharged,
• A Hydraulic piston (3) of the actuator, which converts hydraulic energy into mechanical energy, provides hydraulic triggering of the three-point hitch system, and provides mechanical control,
• A check valve (6), which prevents the oil, which should remain pressurized within the hydraulic piston (3), from going back to the pump (P) through the Hydraulic pump (P) line with actuator internal leakages,
• A time-delay relay (7) supplying electricity to a solenoid valve (4) which prevents undesired movement in the system when the tractor is turned off,
• Button for activating and deactivating the solenoid valve (4) ***characterized in that*** the single solenoid valve (4) that allows the hydraulic piston (3) to be driven and a piston spring (5), which allows the system to return to its initial position when the solenoid valve (4) is deactivated,
• A valve body (2), in which the actuator, the solenoid valve (4) and the check valve (6) are combined.

2. An electro-hydraulic liftomatic system according to claim 1, **characterized in that** material of said Valve body (2) is spheroidal cast.
